# EUROPÄISCHE PATENTANMELDUNG

(11) **EP 1 650 409 A1**
(43) Veröffentlichungstag der Anmeldung: **26.04.2006**
(21) Anmeldenummer: 04405654.7
(22) Anmeldetag: 21.10.2004
(51) Int. Cl.: F01D 25/28, F02C 6/12

(54) **Befestigungsvorrichtung eines Turboladergehäuses**

(71) Anmelder: ABB Turbo Systems AG, 5400 Baden (CH)
(72) Erfinder: Bättig, Josef, 5704 Egliswil (CH); Wellenkamp, Ulrich, 5210 Windisch (CH)
(74) Vertreter: ABB Patent Attorneys

(57) **Zusammenfassung**

Die Befestigungsvorrichtung eines Turboladergehäuses umfasst zwei Pendelstützen (40,50), welche je an einem axial äusseren Ende des Turboladergehäuses (10,20) angeordnet sind. Weiter umfasst die Befestigungsvorrichtung eine axial zwischen den Pendelstützen angeordnete Stützplatte (60), welche unter Bildung eines spitzen Winkels zur Turboladerwelle mit dem Turboladergehäuse sowie dem Untergrund (90) verbindbar ist.

Die Anordnung der Pendelstützen an den axialen Enden des Abgasturboladers sorgt für eine grösstmögliche Standfläche, während die Stützplatte die notwendige axiale Steifigkeit gewährleistet. Die Befestigungsvorrichtung lässt den Bereich zwischen Turbinengehäuse und Verdichtergehäuse frei, so dass das Lagergehäuse (30) frei zugänglich bleibt.

## Beschreibung

### Technisches Gebiet

Die Erfindung bezieht sich auf das Gebiet der Abgasturbolader. Sie betrifft eine Befestigungsvorrichtung zur Befestigung eines Turboladergehäuses an einem Untergrund gemäss dem Oberbegriff des Patentanspruchs 1.

### Stand der Technik

Abgasturbolader werden zur Leistungssteigerung von Verbrennungsmotoren eingesetzt. Bei Abgasturboladern mit Radialturbinen ist das zwischen Verdichtergehäuse und Turbinengehäuse angeordnete Lagergehäuse bedingt durch die kompakte Bauweise axial sehr gedrungen. Die Befestigung solcher Abgasturbolader an dem Untergrund, beispielsweise an der Konsole eines Verbrennungsmotors, erfolgt in der Regel mit einer Hauptstütze beim Lagergehäuse und, aus Steifigkeitsgründen, mit einer zusätzlichen Stütze auf der Heissgasseite (Turbinenseite).

Eine solche Befestigung ist aus dem Stand der Technik bekannt und beispielsweise in EP 1 331 365 dargestellt und beschrieben. Durch die zusätzliche Abstützung und die damit vergrösserte Standfläche soll verhindert werden, dass der Abgasturbolader durch die Motorschwingungen zu Eigenfrequenzschwingungen angeregt wird. Allerdings kann die Anordnung mit einer Hauptstütze am Lagergehäuse und einer zusätzlichen Stütze am Turbinengehäuse aufgrund der grossen Temperaturunterschiede zwischen dem Lagergehäuse und dem Turbinengehäuse und der damit verbundenen unterschiedlichen Wärmeausdehnung zu Zwängen im Turbinengehäuse führen.

Moderne Turbolader erlauben die flexible Ausrichtung der Verdichtergehäuse bzw. der Turbinengehäuse bezüglich dem Lagergehäuse. Die definitive Montage der Gehäuse und ihre Ausrichtung zueinander erfolgt erst beim Befestigen des Turboladers an dem Untergrund. Hierfür ist es notwendig, dass der Bereich zwischen dem Verdichtergehäuse und dem Turbinengehäuse gut zugänglich ist, um beispielsweise die Befestigungsmittel zum Verbinden des Verdichtergehäuses oder des Turbinengehäuses mit dem Lagergehäuse anzubringen. Da die massive Hauptstütze im Bereich des Lagergehäuses sehr viel Platz einnimmt, erschwert sie die Zugänglichkeit für die Befestigung des Verdichtergehäuses oder des Turbinengehäuses sowie für die Ölversorgung und für allfällig im Lagerbereich anzuschliessende Betriebsüberwachungssonden.

### Kurze Darstellung der Erfindung

Der Erfindung liegt die Aufgabe zugrunde, eine stabile, zwangsfreie Befestigungsvorrichtung zur Befestigung eines Turboladergehäuses an einem Untergrund mit einer möglichst grossen Standfläche zu schaffen, welche eine gute Zugänglichkeit im Bereich des Lagergehäuses ermöglicht.

Erfindungsgemäss wird diese Aufgabe mit einer Befestigungsvorrichtung mit den Merkmalen des Patentanspruchs 1 gelöst.

Die erfindungsgemässe Befestigungsvorrichtung umfasst zwei Pendelstützen, welche je an einem axial äusseren Ende des Turboladergehäuses angeordnet sind.

Weiter umfasst die Befestigungsvorrichtung eine axial zwischen den Pendelstützen angeordnete Stützplatte, welche unter Bildung eines spitzen Winkels zur Turboladerwelle mit dem Turboladergehäuse sowie dem Untergrund verbindbar ist.

Die Stützplatte ist im Bereich der Untergrundsbefestigung einer ersten Pendelstütze mit dem Untergrund und mit dem der ersten Pendelstütze gegenüberliegenden Turboladergehäuseteil, entweder dem Turbinengehäuse oder dem Verdichtergehäuse, verbindbar.

Die Anordnung der Pendelstützen an den axialen Enden des Abgasturboladers sorgt für eine grösstmögliche Standfläche, während die Stützplatte die notwendige axiale Steifigkeit gewährleistet. Das Gewicht des Turboladers wird hauptsächlich von den beiden Pendelstützen getragen, während der Stützplatte eine stabilisierende Funktion zukommt. Die erfindungsgemässe Befestigungsvorrichtung lässt den Bereich zwischen Turbinengehäuse und Verdichtergehäuse frei, so dass das Lagergehäuse während der Montage oder im Betrieb frei zugänglich bleibt.

Die Stützplatte kann im Bereich des abzustützenden Turboladergehäuseteils, also im Bereich des Turbinengehäuses oder des Verdichtergehäuses, mit der jeweiligen Pendelstütze, welche das Gewicht des entsprechenden Gehäuseteil trägt, verbunden sein. Dabei können die Stützplatte und eine oder beide der Pendelstützen einteilig ausgebildet sein, wodurch sich eine in sich stabile Befestigungsvorrichtung ergibt, welche beim Montieren des Abgasturboladers mit geringerem Aufwand eingebaut werden kann.

Weitere Vorteile ergeben sich aus den abhängigen Ansprüchen.

### Kurze Beschreibung der Zeichnungen

Nachfolgend wird anhand von Figuren die Erfindung genauer erläutert. Hierbei zeigen:
- Fig. 1: in isometrischer Ansicht einen Abgasturbolader mit einer ersten Variante einer ersten Ausführungsform der erfindungsgemässen Befestigungsvorrichtung,
- Fig. 2: in isometrischer Ansicht der Rückseite einen Abgasturbolader nach Fig.1,
- Fig. 3: in isometrischer Ansicht einen Abgasturbolader mit einer zweiten Variante der ersten Ausführungsform der erfindungsgemässen Befestigungsvorrichtung nach Fig. 1,
- Fig. 4: in Seitenansicht entlang seiner Längsachse den Abgasturbolader nach Fig. 3,
- Fig. 5: in Seitenansicht entlang seiner Längsachse einen Abgasturbolader mit einer dritten Variante der ersten Ausführungsform der erfindungsgemässen Befestigungsvorrichtung nach Fig. 1, und
- Fig. 6: in Seitenansicht entlang seiner Längsachse einen Abgasturbolader mit einer zweiten Ausführungsform der erfindungsgemässen Befestigungsvorrichtung.

### Weg zur Ausführung der Erfindung

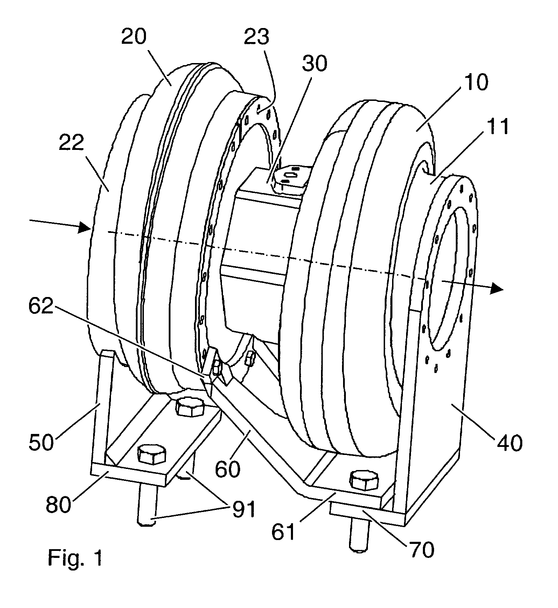

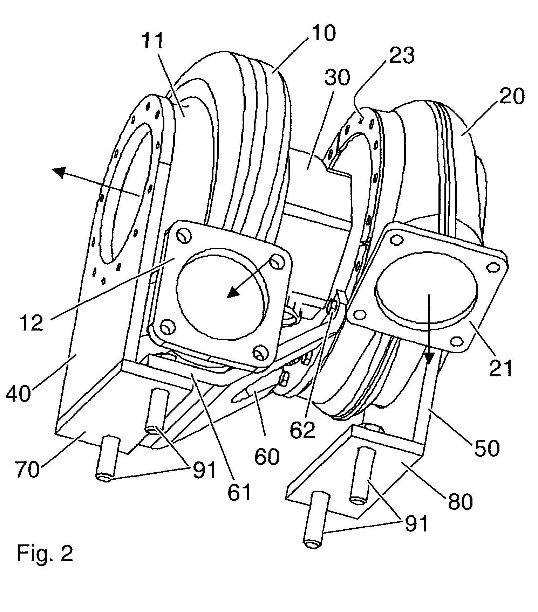

Figur 1 zeigt in isometrischer Ansicht einen Abgasturbolader mit einer erfindungsgemässen Befestigungsvorrichtung. In der Figur sichtbar sind vom Abgasturbolader allerdings lediglich die Gehäuseteile der Turbine 10, des Verdichters 20 sowie des Lagers 30. Innerhalb des Turbinengehäuses 10 befindet sich das Turbinenrad, welches über die im Lagergehäuse 30 drehbar gelagerte Welle mit dem im Verdichtergehäuse 20 angeordneten Verdichterrad verbunden ist. Das Gehäuse des Abgasturboladers weist vier Gehäuseöffnungen zum Zuführen und Abführen der Luft bzw. des Abgases auf. Durch eine Öffnung in dem in der Ansicht von der Rückseite gemäss Figur 2 gezeigten Turbineneintrittsflansch 12 wird das heisse Abgas vom in den Figuren nicht dargestellten Verbrennungsmotor ins Turbinengehäuse geführt, wo es das Turbinenrad antreibt, bevor es das Turbinengehäuse über eine Öffnung in dem Turbinenaustrittsflansch 11 verlässt und den Auspuffanlagen zugeführt wird. Die Frischluft für den Verbrennungsmotor wird durch eine Öffnung in dem Verdichtereintrittsflansch 22 ins Verdichtergehäuse 20 geführt, wo sie beschleunigt und komprimiert wird, bevor sie das Verdichtergehäuse über eine Öffnung in dem Verdichteraustrittsflansch 21 verlässt und den Brennkammern des Motors zugeführt wird. Die Leitungen von und zu dem Abgasturbolader, sowie allenfalls für den Betrieb des Abgasturboladers vorgesehene Filter und/ oder Schalldämpfer sind in den Figuren nicht dargestellt.

Die erfindungsgemässe Befestigung des Abgasturboladers am Untergrund, beispielsweise am Gehäuse des Verbrennungsmotors, erfolgt mittels zweier sogenannter Pendelstützen 40 und 50, welche je an einem axialen Ende des Abgasturboladers angeordnet sind. Die Pendelstützen sind in vertikaler Richtung sehr steif ausgebildet, so dass der Abgasturbolader in dieser Richtung getragen wird.

In axialer Richtung dagegen sind die Pendelstützen eher weich und lassen eine gewisse Biegung zu. Die turbinenseitige Pendelstütze 40 ist form- und/ oder kraftschlüssig mit dem Turbinenaustrittsflansch 11 verbunden. Dabei kann die Pendelstütze eine Öffnung aufweisen welche entweder im Durchmesser etwa dem äusseren Durchmesser des Turbinenaustrittsflansches entspricht, so dass beim Aufschieben der Pendelstütze in axialer Richtung der Turbinenaustrittsflansch in die Öffnung der Pendelstütze eingeschoben werden kann (formschlüssig), oder welche gleich gross ist wie die Öffnung im Turbinenaustrittsflansch, so dass die Öffnung in der Pendelstütze den Strömungskanal des Abgases begrenzt. In beiden Fällen kann die Pendetstütze mittels Schrauben, Bolzen oder anderen Befestigungsmitteln am Turbinengehäuse befestigt sein (kraftschlüssig). Die Pendelstütze kann dabei auch zwischen dem Turbinengehäuse und einem anschliessenden Abgasrohrteil festgeklemmt sein.

Analog ist die verdichterseitige Pendelstütze 50 form- und/ oder kraftschlüssig mit dem Verdichtereintrittsflansch 22 verbunden. Dabei kann die Pendelstütze eine Öffnung aufweisen welche entweder im Durchmesser etwa dem äusseren Durchmesser des Verdichtereintrittsflansches entspricht, so dass beim Aufschieben der Pendelstütze in axialer Richtung der Verdichtereintrittsflansch in die Öffnung der Pendelstütze eingeschoben werden kann (formschlüssig), oder welche gleich gross ist wie die Öffnung im Verdichtereintrittsflansch, so dass die Öffnung in der Pendelstütze den Strömungskanal der zu verdichtenden Luft begrenzt. In beiden Fällen kann die Pendelstütze mittels Schrauben, Bolzen oder anderen Befestigungsmitteln am Verdichtergehäuse befestigt sein (kraftschlüssig). Die Pendelstütze kann dabei auch zwischen dem Verdichtergehäuse und einem in Strömungsrichtung vorgeschalteten Rohrteil oder Schalldämpfer festgeklemmt sein.

Die Pendelstützen haben den Vorteil, dass sie durch ihre in gewissen Massen vorhandene Flexibilität in axialer Richtung eine begrenzte, thermisch bedingte Ausdehnung der Gehäuseteile kompensieren können. Somit werden die Gehäuseteile, insbesondere das durch die Abgase stark erhitzte Turbinengehäuse, weniger grossen Zwängen ausgesetzt, was sich positiv auf die Lebensdauer der Gehäuseteile auswirkt. Alternativ zu der oben beschriebenen Ausführung der Pendelstützen mit form- bzw. kraftschlüssiger Verbindung zu dem jeweiligen Flansch kann zumindest einer der beiden Pendelstützen lediglich als Aufliege-Pendelstütze mit eingeschränkter Fixierung des Gehäuses bezüglich der axialen Richtung ausgebildet sein. Dadurch kann die Längenkompensierbarkeit der Befestigungsvorrichtung in axialer Richtung noch gesteigert werden.

Die Pendelstützen sind mittels Befestigungsmitteln 91 am Untergrund befestigt.

Hierfür weisen die im wesentlichen vertikal, bzw. senkrecht zum Untergrund, verlaufenden Pendelstützen 40 und 50 je eine Fixierleiste 70 und 80 auf. Die Fixierleisten und Pendelstützen können einteilig ausgebildet oder mit geeigneten Mitteln schlüssig miteinander verbunden sein.

Erfindungsgemäss umfasst die Befestigungsvorrichtung neben den beiden Pendelstützen noch eine weitere Stütze in der Form einer Stützplatte 60. Die Stützplatte 60 ist im Bereich der Fixierleiste der einen Pendelstütze ebenfalls mittels einer Fixierleiste 61 am Untergrund befestigt und verläuft in einem spitzen Winkel zur Abgasturboladerachse zum jeweilig gegenüberliegenden Gehäuseteil. Der spitze Winkel sorgt für die notwendige Steifigkeit der Befestigungsvorrichtung, damit der Abgasturbolader auf den Pendelstützen nicht unkontrolliert ins Schwingen kommt. Ist also, wie beim ersten Ausführungsbeispiel der erfindungsgemässen Befestigungsvorrichtung gemäss den Figuren 1 bis 5, die Stützplatte 60 im Bereich der Fixierleiste 70 der turbinenseitigen Pendelstütze 40 am Untergrund 90 befestigt, greift die Stützplatte mit dem gegenüberliegenden Ende im Bereich des Verdichtergehäuses an.

Dabei kann ein hierfür vorgesehener Befestigungskragen 62 der Stützplatte gemäss der in den Figuren 1 und 2 dargestellten, ersten Variante an dem verdichterseitigen Befestigungsflansch 23 befestigt sein.

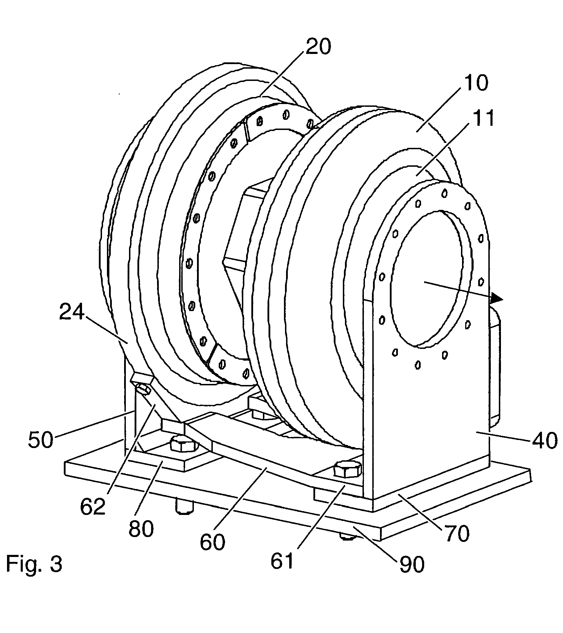

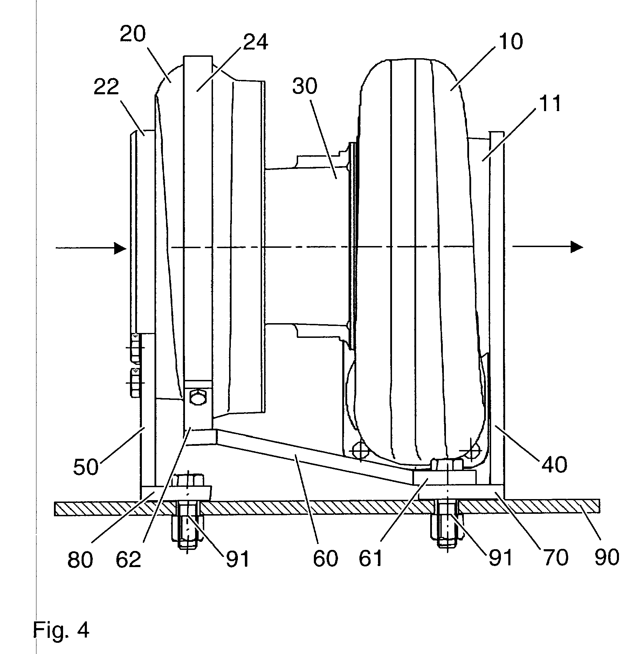

Alternativ dazu kann ein angepasster Befestigungskragen gemäss der in den Figuren 3 und 4 dargestellten, zweiten Variante an einer Befestigungsrippe 24 des Verdichtergehäuses befestigt sein. Gegenüber der ersten Variante weist die Stützplatte einen noch spitzeren Winkel zur Abgasturboladerachse auf, was die Steifigkeit der Abstützung weiter erhöht.

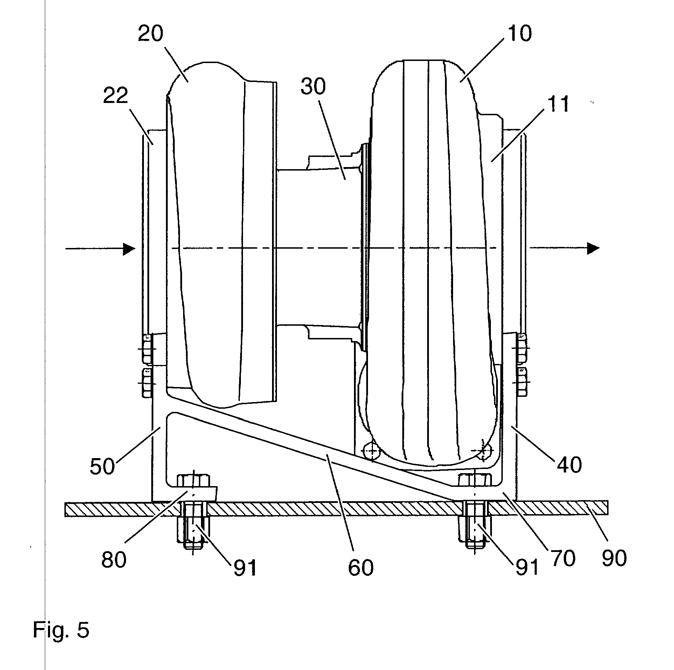

Gemäss der in der Figur 5 dargestellten, dritten Variante können die Stützplatte und die eine und/ oder andere Pendelstütze einteilig ausgebildet sein, wodurch sich die Anzahl der zu montierenden Bauteile auf elegante Weise reduziert.

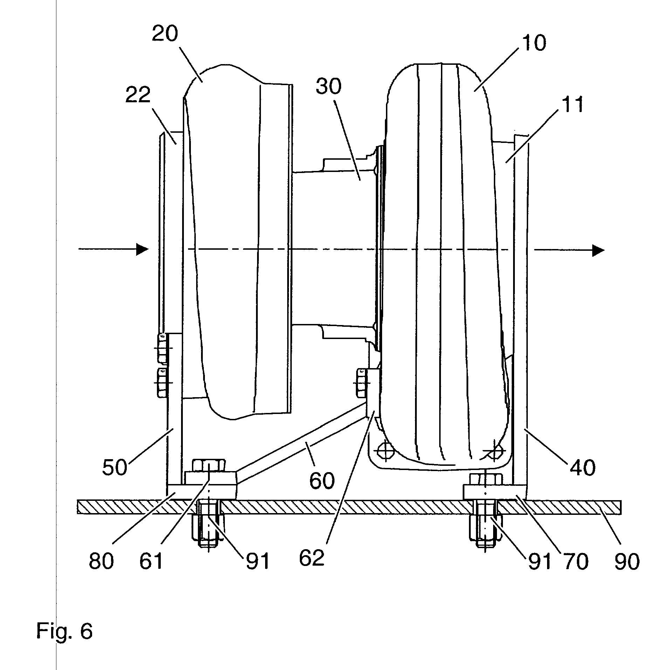

Figur 6 zeigt schliesslich in einem zweiten Ausführungsbeispiel wie die Stützplatte 60 mit der Fixierleiste 61 verdichterseitig am Untergrund 90 befestigt ist. Analog der ersten Variante des ersten Ausführungsbeispiels ist die Stützplatte 60 mit einem Befestigungskragen 62 an der Stirnseite des gegenüberliegenden Gehäuses befestigt. In diesem Fall liegt der Befestigungskragen an einem Befestigungsflansch des Turbinengehäuses an und ist mit Befestigungsmitteln daran befestigt. Im gezeigten Beispiel hat das Turbinengehäuse grössere radiale Abmessungen als das Verdichtergehäuse, so dass sich aus der Anordnung eine speziell flache Verbindung mittels der Stützplatte 60 ergibt.

Entsprechend der beiden anderen gezeigten Varianten des ersten Ausführungsbeispiels der erfindungsgemässen Befestigungsvorrichtung kann auch die zweite Variante ausgeführt sein, also die Stützplatte an einem anderen Ort am Turbinengehäuse befestigt sein, oder die Stützplatte und die Pendelstützen einteilig ausgebildet sein.

Alle dargestellten Varianten lassen erfindungsgemäss den Bereich um das Lagergehäuse 30 weitgehend frei, so das dieser Platz für Ölzufuhrleitungen, Betriebsüberwachungssonden oder einfach nur zur besseren Zugänglichkeit beim Montieren des Abgasturboladers genutzt werden kann.

### Bezugszeichenliste

- 10: Turbinengehäuse
- 11: Turbinenaustrittsflansch
- 12: Turbineneintrittsflansch
- 20: Verdichtergehäuse
- 21: Verdichteraustrittsflansch
- 22: Verdichtereintrittsflansch
- 23: Verdichterseitiger Befestigungsflansch
- 24: Verdichterseitige Befestigungsrippe
- 40: Turbinenseitige Pendelstütze
- 50: Verdichterseitige Pendelstütze
- 60: Stützplatte
- 61: Fixierleiste
- 62: Befestigungskragen
- 70: Fixierleiste
- 80: Fixierleiste
- 90: Untergrund
- 91: Befestigungsmittel

## Patentansprüche

1. Befestigungsvorrichtung zur Befestigung eines Turboladergehäuses mit einem Turbinengehäuse (10) und einem Verdichtergehäuse (20), umfassend zwei mit Abstand voneinander an einem Untergrund (90) fixierbare Stützen (40, 50),
**dadurch gekennzeichnet, dass**
die Befestigungsvorrichtung zwei Pendelstützen (40, 50) umfasst, welche je an einem axial äusseren Ende des Turboladergehäuses angeordnet sind, und dass die Befestigungsvorrichtung eine axial zwischen den Pendelstützen (40, 50) angeordnete Stützplatte (80) umfasst, welche unter Bildung eines spitzen Winkels zur Turboladerwelle mit dem Turboladergehäuse (10, 20) sowie dem Untergrund (90) verbindbar ist.

2. Befestigungsvorrichtung nach Anspruch 1, **dadurch gekennzeichnet, dass** mittels einer ersten Pendelstütze (40, 50) das eine Turboladergehäuseteil, entweder das Turbinengehäuse (10) oder das Verdichtergehäuse (20), mit dem Untergrund (90) verbindbar ist, dass
die Stützplatte (60) im Bereich der Untergrundsbefestigung (70, 80) der ersten Pendelstütze (40, 50) mit dem Untergrund verbindbar ist, und dass
die Stützplatte (60) mit dem der ersten Pendelstütze gegenüberliegenden anderen Turboladergehäuseteil (20, 10) verbindbar ist.

3. Befestigungsvorrichtung nach Anspruch 2, **dadurch gekennzeichnet, dass** die Stützplatte (60) im Bereich des anderen Turboladergehäuseteils (20, 10) an der zweiten Pendelstütze (50, 40) befestigt ist.

4. Befestigungsvorrichtung nach einem der vorangehenden Ansprüche, **dadurch gekennzeichnet, dass** die Stützplatte (60) und zumindest eine der beiden Pendelstützen (40, 50) einteilig ausgebildet sind.

5. Befestigungsvorrichtung nach einem der vorangehenden Ansprüche, **dadurch gekennzeichnet, dass** zumindest eine der beiden Pendelstützen (40, 50) form- und/ oder kraftschlüssig mit dem Turboladergehäuse verbindbar ist.

6. Befestigungsvorrichtung nach einem der vorangehenden Ansprüche, **dadurch gekennzeichnet, dass** eine der beiden Pendelstützen (40, 50) form- und/ oder kraftschlüssig mit dem Turboladergehäuse verbindbar ist, und dass mit der anderen Pendelstütze (50, 40) das Turboladergehäuse in axialer Richtung verschiebbar verbindbar ist.

7. Abgasturbolader, **gekennzeichnet durch** die Befestigung auf einem Untergrund mittels einer Befestigungsvorrichtung gemäss einem der vorangehenden Ansprüche.
